# EUROPEAN PATENT SPECIFICATION

(11) **EP 2 644 035 B1**
(45) Date of publication and mention of the grant of the patent: **08.07.2015**
(21) Application number: 13173443.6
(22) Date of filing: 22.04.2008
(51) Int. Cl.: A23C 21/02, A23L 2/38, A23C 21/06

(54) **BEVERAGE COMPRISING A FERMENTED WHEY PREPARATION AND METHOD FOR PRODUCING THE SAME**
Getränk auf basis einer fermentierte Molkezubereitung und dessen Herstellung
Boisson basée sur une préparation de lactosérum fermenté et son procédé de production

(30) Priority: 26.04.2007 JP 2007116597
(43) Date of publication of application: 02.10.2013
(62) Divisional of application: 08751935.1
(73) Proprietor: Meiji Co., Ltd., Tokyo 136-8908 (JP)
(72) Inventor: SAKATA, Tadashi, ODAWARA-SHI, 250-0862 (JP); AKAMATSU, Ayumi, ODAWARA-SHI, 250-0862 (JP); HONDA, Takeshi, ODAWARA-SHI, 250-0862 (JP)
(74) Representative: Regimbeau

(56) References cited:
- JP-A- 61 170 341
- JP-A- 62 040 248
- NL-A- 7 203 066
- Anonymous: "Mango Whey Drink", Mintel/ GNPD , 1 May 2006 (2006-05-01), page 1, XP002602224, Retrieved from the Internet: URL:http://www.gnpd.com/sinatra/gnpd/searc h_results/&s_sort=2&p_page_number=2&p_page _size=30&item_id=532626 [retrieved on 2010-09-22]
- Anonymous: "Peach & Passionfruit Milk Drink", Mintel/ GNPD , 1 August 2005 (2005-08-01), page 1, XP002602225, Retrieved from the Internet: URL:http://www.gnpd.com/sinatra/gnpd/searc h_results/&p_page_number=2&p_page_size=30& item_id=390642 [retrieved on 2010-03-10]
- Anonymous: "Whey Drink with Orange Juice Vitamins & Minerals", Mintel/ GNPD , 1 April 2005 (2005-04-01), page 1, XP002602226, Retrieved from the Internet: URL:http://www.gnpd.com/sinatra/gnpd/searc h_results/&p_page_number=6&p_page_size=30& item_id=354747 [retrieved on 2010-03-10]
- Anonymous: "Multi Fruit Drink", Mintel/ GNPD , 1 April 2006 (2006-04-01), page 1, XP002602227, Retrieved from the Internet: URL:http://www.gnpd.com/sinatra/gnpd/searc h_results/&p_page_number=4&p_page_size=30& item_id=519878 [retrieved on 2010-03-10]
- Anonymous: "Live Yoghurt Drink", Mintel/ GNPD , 1 June 2005 (2005-06-01), page 1, XP002602228, Retrieved from the Internet: URL:http://www.gnpd.com/sinatra/gnpd/searc h_results/&p_page_number=5&p_page_size=30& item_id=373060 [retrieved on 2010-09-22]
- M. BEAULIEU, Y. POULIOT, M. POULIOT: "Thermal Aggregation of Whey Proteins in Model Solutions as Affected by Casein/Whey Protein Ratios", JOURNAL OF FOOD SCIENCE, vol. 64, no. 5, 1 September 1999 (1999-09-01), pages 776-780, XP002602229,
- M. PAULSSON, P.-O. HEGG AND H.B. CASTBERG: "Thermal stability of whey proteins studied by differential scanning calorimetry", THERMOCHIMICA ACTA, vol. 95, 8 November 1985 (1985-11-08), pages 435-440, XP002602230,
- MULVIHILL D M ET AL: "Whey proteins and their thermal denaturation - a review", IRISH JOURNAL OF FOOD SCIENCE AND TECHNOLOGY, TEAGASC, IE, vol. 11, no. 1, 1 January 1987 (1987-01-01), pages 43-75, XP001538203, ISSN: 0332-0375

## Description

### [BACKGROUND OF THE INVENTION]

### Field of the invention

The present invention relates to a beverage comprising a fermented whey preparation having a unique and fresh flavor and a good texture and a method for producing the whey preparation.

### Background art

Whey as a by-product produced, for example, in the production of cheese is known to contain a large amount of various essential amino acids, proteins, vitamins, and saccharides and thus to have a high nutrition value. On the other hand, the whey, when merely dried, has a poor flavor and as such is unsatisfactory for human consumption. Accordingly, various attempts have hitherto been made to produce foods utilizing the high nutrition value of the whey.

For example, Japanese Patent Laid-Open Publication No. 170341/1986 proposes a method for producing a whey fermented beverage. Japanese Patent Laid-Open Publication No. 040248/1987 proposes a method for producing a whey sour base. Further, Japanese Patent Publication No. 051046/1995 proposes a method for producing a fermented whey powder (all the above publications are applications filed by the present applicant). These publications disclose a method comprising regulating the solid content of an aqueous whey solution to about 2 to 20% by weight (that is, regulating the concentration of the whey protein to about 1 to 13% by weight), sterilizing the aqueous whey solution, for example, under relatively low-temperature conditions at 90°C for 10 min, fermenting the aqueous whey solution with lactic bacteria to produce a fermented whey preparation. In these cases, sterilization under relatively low-temperature conditions (low-temperature sterilization) is indispensable. This is because, when higher-temperature conditions are adopted, coagulates occur due to thermal denaturation (thermal coagulation) of the protein which is possibly unfavorable from the viewpoint of the quality of products. On the other hand, low-temperature sterilization has not been always satisfactory from the viewpoint of sterilization efficiency.

Japanese Patent Laid-Open Publication No. 238614/1997 (Japanese Patent No. 3417513) proposes a method for producing a whey. This publication discloses a method for producing a white whey preparation having excellent thermal stability in which, after the regulation of the solid content of an aqueous whey solution to about 0.1 to 10% by weight (that is, regulating the concentration of the whey protein to about 0.5 to 1.2% by weight) and the regulation of the pH value to 5.5 to 6.5, the aqueous whey solution is sterilized under high-temperature conditions of 90°C or above, for example, 120°C for 2 sec, to bring the whey protein to micelles (colloidal particles with a particle diameter of 20 to 600 µm). In this case, it is particularly indispensable that the solid content of the aqueous whey solution be brought to not more than 10% by weight, that is, the concentration of the whey protein be brought to not more than 1.2% by weight, and, further, the aqueous whey solution is rendered weakly acidic, i.e., is adjusted to pH 5.5 to 6.5. These conditions are regarded as necessary for forming micelles of the whey protein and producing a white whey. Accordingly, here it is not contemplated that the solid content of the aqueous whey solution is rendered larger than 10% by weight and the pH value is rendered larger than 6.5. It is a matter of course that, in this case, any method for ensuring good thermal stability is not suggested. Fermentation, for example, with lactic bacteria or yeast is also not contemplated.

### [SUMMARY OF THE INVENTION]

The present inventors have now been found that high-temperature sterilization of an aqueous whey protein solution regulated to a solid content of 11 to 35% by weight and a pH value of 6.5 to 8.0 provides a coagulate-containing aqueous solution which, when as such subjected to lactic acid fermentaion to prepare a fermentation liquor which is then homogenized, can unexpectedly produce a good fermented whey preparation which can simultaneously realize excellent flavor and texture unattained by prior art techniques. In this case, not only the lactic acid fermentation with lactic bacteria but also lactic acid fermentation with yeast could provided a good whey preparation. The fermented whey preparation had fermentation-derived unique and a strong good flavor and, at the same time, had a refreshed and invigorating flavor which is unusual in fermentaion products. Further, the fermented whey preparation thus obtained had excellent thermal stability while having a velvety texture and a suitable viscosity. This fermented whey preparation did not contain unfavorable bacteria such as thermophile and thus is also excellent in hygiene. Further, when this fermented whey preparation is used as a material for fruit juice-type beverages to produce beverages, beverages having excellent flavor and properties could be produced. The present invention has been made based on such finding.

An object of the present invention is to provide a beverage comprising a fermented whey preparation which has a fermentation-derived unique and good flavor and, at the same time, has a refreshed and invigorating flavor and further has a velvety texture and further has excellent thermal stability and safety. Another object of the present invention is to provide a method for producing such a beverage comprising a fermented whey preparation.

The fermented whey preparation is produced by carrying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor.

The high-temperature sterilization is carried out at a temperature of 91°C to 99°C for 5 to 15 min. In a preferred embodiment of the present invention, the high-temperature sterilization is carried out at a temperature of 100°C to 150°C for 1 to 30 sec.

In a further preferred embodiment of the present invention, the aqueous whey protein solution has been adjusted to pH 6.6 to 7.6.

In the above step, when the aqueous solution after the high-temperature sterilization contains coagulates, the coagulates have a particle diameter of 2 to 100 µm and the aqueous solution as such is subjected to the step of lactic acid fermentation.

Further, in the lactic acid fermentation of the aqueous whey protein solution, lactic acid is produced by fermentation with lactic bacteria or yeast.

According to the present invention there is provided a beverage comprising a fermented whey preparation such as defined in claims 1-5.

The beverage according to the present invention is produced by adding an additive component for beverages to the above fermented whey preparation and subjecting the mixture to high-temperature sterilization treatment at 100°C to 150°C for 1 to 30 sec, such as defined in claims 6-9.

Further, there is provided a method for producing a fermented whey preparation, comprising carrying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor. The high-temperature sterilization is carried out at a temperature of 91°C to 99°C for 5 to 15 min. Alternatively, the high-temperature sterilization is carried out at a temperature of 100°C to 150°C for 1 to 30 sec. Preferably, the aqueous whey protein solution has been adjusted to pH 6.6 to 7.6.

In the method, preferably, when the aqueous solution after the high-temperature sterilization contains coagulates, the coagulates have a particle diameter of 2 to 100 µm and the aqueous solution as such is subjected to the step of lactic acid fermentation.

In the present invention, the method for producing a beverage comprises adding an additive component for beverages to the above fermented whey preparation according to any one of claims 6 to 9 and subjecting the mixture to high-temperature sterilization treatment at 100°C to 150°C for 1 to 30 sec to produce a beverage.

A fermented whey preparation, which possesses nonconventional flavor and texture and thermal stability and is also excellent in safety, and a beverage using the fermented whey preparation can be provided by conducting sterilization under such conditions that have hitherto been avoided as causing coagulates due to thermal denaturation of proteins, then conducting lactic acid fermentation, in such a state that coagulates are contained, and further homogenizing the fermentation liquor. As described above, the fermented whey preparation has a fermentation-derived unique and good flavor and, at the same time, has a refreshed and invigorating flavor and further has a velvety texture. The fermented whey preparation is also excellent in thermal stability and safety. The fermented whey preparation can be said to have unconventional properties (texture) and flavors (thickened feeling), for example, whey-derived starting materials, preparations, and beverages. Accordingly, beverages having such properties can be advantageously distinguished from conventional products and high commercial values.

### [BRIEF DESCRIPTION OF THE DRAWINGS]

[Fig. 1] Fig. 1 is an embodiment of a production process of a fermented whey preparation according to the present invention.
[Fig. 2] Fig. 2 is an embodiment of a beverage according to the present invention.
[Fig. 3] Fig. 3 is a diagram showing the results of Example 1.

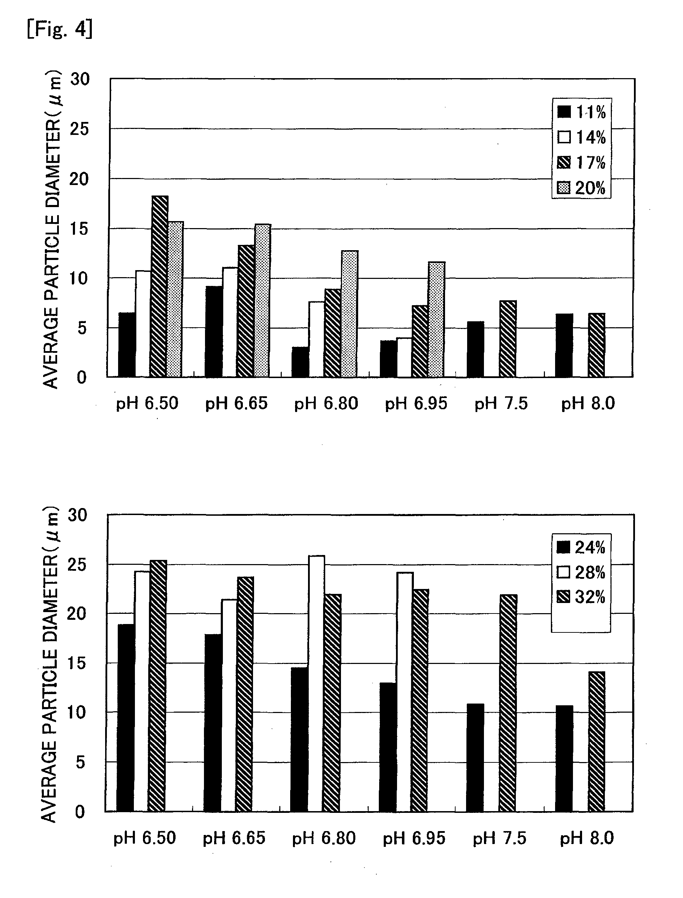

[Fig. 4] Fig. 4 is a diagram showing the results of Example 6.

### [DETAILED DESCRIPTION OF THE INVENTION]

### Fermented whey preparation

As described above, the fermented whey preparation is produced by carrying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor as such.

So far as the present inventors know, there have hitherto been no report about a process in which, after bringing the solid content of an aqueous whey protein solution to more than 10% by weight, the aqueous whey protein solution is sterilized at a high temperature above 90°C followed by fermentation with lactic bacteria or yeast to produce a fermented whey preparation. The reason for this is believed to reside in that, when the aqueous whey protein solution is sterilized, for example, at an ultrahigh temperature (UHT), the whey protein is thermally coagulated resulting in significantly deteriorated quality. For example, when a method is adopted in which, after the regulation of the aqueous whey protein solution to a high concentration, the aqueous solution is rendered weakly acidic to a pH value of not more than 6.5 followed by sterilization at a high temperature of above 90°C, huge coagulates are disadvantageously produced.

For this reason, in mass production on a commercial scale, coagulates are less likely to be dispersed, for example, in tanks or piping. Further, the deposition or build-up of coagulates onto tanks, piping, and valves is significant. This is causative of contamination. In the prior art, a method has been generally adopted in which, while avoiding the production of coagulates, even though coagulates are formed, the step of fermentation is carried out after homogenization or other treatment. When the aqueous whey protein solution is rendered weakly acidic to pH 6.5 or less before the fermentation, the function of lactic bacteria is less likely to exhibit and the fermentation is less likely to proceed. Accordingly, in some cases, a fermentation-derived unique and good flavor cannot be achieved without difficulties. On the other hand, when the aqueous whey protein solution has a pH value of more than 8.0, an alkaline nature-derived flavor is so strong that a flavor unfavorable as a starting material for beverages is sometimes produced.

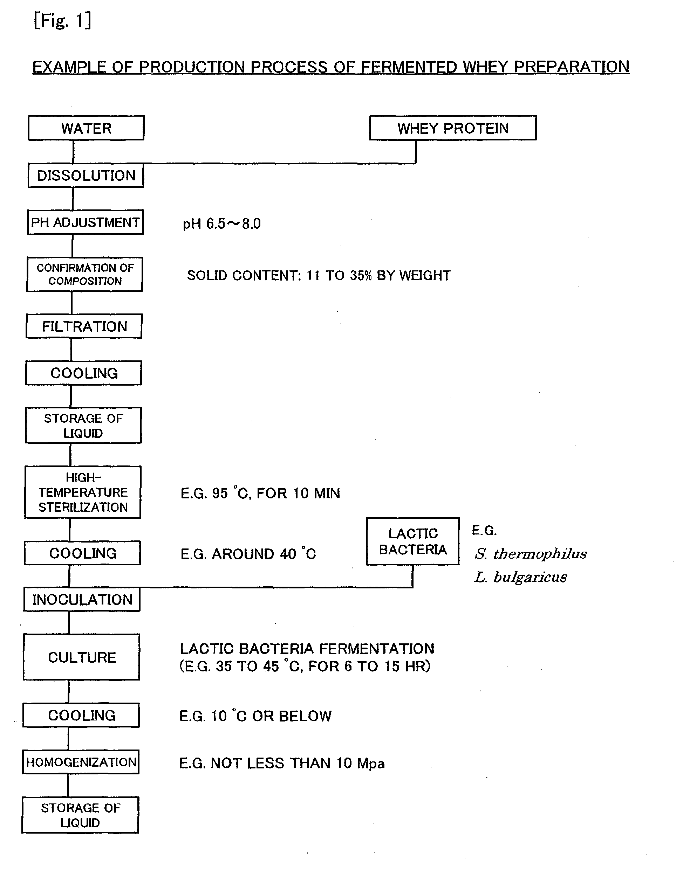

The production process of a fermented whey preparation will be described. An example of a flow sheet of the production process is shown in Fig. 1.

The term "whey protein" as used herein connotes undiluted solutions and concentrates of whey and reduction solutions of whey powder and the like. Whey proteins usable herein include whey protein concentrates (WPCs), whey protein isolates (WPIs), sweet whey powders, desalted whey powders, and nonfat dry milks. These why proteins may be used in combination. Commercially available products of whey proteins may also be used. Typical examples of the composition of major ingredients of whey are as follows. For WPC, for example, the solid content is 95.5%, and, in this case, the protein content, lactose content, and ash content are 76.0%, 12.0%, and 2.5%, respectively. For WPI, for example, the solid content is 94.1%, and, in this case, the protein content, lactose content, and ash content are 90.0%, 1.7%, and 1.8%, respectively. For the sweet whey powder, for example, the solid content is 97.0%, and, in this case, the protein content, lactose content, and ash content are 12.0%, 75.5%, and 8.5%, respectively. For the desalted whey powder, for example, the solid content is 98.1%, and, in this case, the protein content, lactose content, and ash content are 11.8%, 79.7%, and 5.6%, respectively. For the nonfat dry milk, for example, the solid content is 95.5%, and, in this case, the protein content, lactose content, and ash content are 34.0%, 53.5%, and 8.0%, respectively.

If necessary, the content (concentration) of the protein can easily be measured by conventional process and apparatus, for example, Kjeldahl method or Lowry method.

The whey protein used is preferably WPC, a sweet whey powder, a desalted whey powder, or a mixture of these materials. A mixture of a sweet whey powder with WPC is more preferred. When the mixture is used, the mixing ratio (on a weight basis) is preferably 1 : 2 to 2 : 1, more preferably 1 : 1 to 2 : 1.

In the aqueous whey protein solution used, the solid content is preferably 11 to 35% by weight, more preferably 13 to 30% by weight, still more preferably 15 to 25% by weight. In this case, the content of the whey protein is preferably 1.3 to 4.5% by weight, more preferably 1.5 to 4% by weight, still more preferably 1.7 to 3% by weight. The above-defined solid content range and whey protein content range are preferred from the viewpoint of denaturing the whey protein to form coagulates having a proper particle diameter.

When the whey protein is dissolved in water, if necessary, the temperature may be brought to 40 to 60°C and, further, for example, a power blender, a homomixer, or a highspeed agitator, may if necessary be used as a dissolver.

In conventional lactic beverages and the like, in many cases, the solid content is brought to 5 to 15% by weight. This is carried out to avoid deposition or other problems involved in the production process and from the viewpoints of flavors, textures and the like. In the present invention, a strong fermentation-derived unique and good flavor could have been realized by enhancing the solid content of the aqueous whey protein solution, bringing the concentration of the milk component to a high level, and conducting fermentation with lactic bacteria or yeast. In this case, the prevention of the production of excessively large coagulates is also important from the viewpoint of production properties of actual products. The present fermented whey preparation has a good flavor by suppressing the size of coagulates to a suitable level and utilizing the coagulates as such.

The solid content of the aqueous solution can easily be determined by conventional method/apparatus, for example, a simple water content measuring method or a sand mulling method.

Before the high-temperature sterilization treatment, the aqueous whey protein solution used is adjusted to pH 6.5 to 8.0, preferably pH 6.6 to 7.8, more preferably pH 6.6 to 7.6, still more preferably pH 6.8 to 7.4, still more preferably pH 6.8 to 7.2, most preferably about pH 7.0. The pH adjustment is preferably carried out with a pH adjustor. The pH adjustor to be used is not particularly limited so far as the pH adjustor can adjust the pH value to the above range and safety high enough to be usable as foods. Typically, the pH adjustor is selected from the group consisting of sodium hydroxide, potassium hydroxide, sodium hydrogencarbonate, and sodium carbonate. These substances may be used in combination. In a preferred embodiment of the present invention, the pH adjustor is sodium hydroxide.

The amount of the pH adjustor used may be properly varied depending, for example, upon the type of the pH adjustor used, a target pH value to be increased, the state of the aqueous solution added (for example, its temperature and pH). For example, when sodium hydroxide is used as the pH adjustor, the amount of sodium hydroxide used is typically 0.01 to 0.5% by weight, preferably 0.01 to 0.3% by weight, in terms of concentration.

In the present invention, at the outset, an aqueous whey protein solution having a solid content of 11 to 35% by weight and a pH value adjusted to 6.5 to 8.0 is subjected to high-temperature sterilization treatment. Heating conditions for high-temperature sterilization treatment correspond to conventional sterilization treatment conditions. In general, beverages containing milk or whey are sterilized by various methods before shipping as products. Here high-temperature thermal sterilization conditions means conditions used as an embodiment of the conventional sterilization treatment. Accordingly, heating conditions for high-temperature sterilization treatment Heating conditions of a temperature above 90°C are used. The above conditions are those which can cause thermal denaturation of proteins. Various unfavorable bacteria such as thermophilic bacteria can be satisfactorily killed by the high-temperature sterilization. Accordingly, the hygiene is improved, and, for example, contamination in fermentation in the later step can be easily prevented.

The high-temperature sterilization treatment is carried out, at 91°C to 99°C for 5 to 15 min, preferably at 92°C to 98°C for 7 to 13 min, more preferably at 93°C to 97°C for 8 to 12 min, particularly preferably at 95°C for 10 min. In another preferred embodiment of the present invention, the high-temperature sterilization treatment is carried out, for example, at 100°C to 150°C for 1 to 30 sec, preferably at 110°C to 140°C for 1 to 20 sec, more preferably at 115°C to 135°C for 1 to 10 sec, still more preferably at 120°C to 130°C for 1 to 5 sec, particularly preferably at 120°C for 3 sec. After the high-temperature sterilization, if necessary, the treated aqueous solution is cooled. The temperature to which the treated aqueous solution is cooled, can be set based on the fermentation temperature in the subsequent fermentation step and is, for example, 30 to 50°C.

In the high-temperature sterilization treatment, the aqueous solution may be further pressurized. In general, when the thermal sterilization treatment is carried out, the sterilization pressure is brought, for example, to 1 to 10 kg/cm² from the viewpoint of preventing boiling of the aqueous solution. In the sterilization treatment in the present invention, in addition to heating, the above pressure may be applied. Apparatuses usable for the high-temperature sterilization treatment include, for example, plate heat exchangers, tube heat exchangers, steam injection sterilizers, steam infusion sterilizers, and electrical heating sterilizers.

Upon the high-temperature sterilization treatment, the resultant aqueous solution contains coagulates. The coagulates are not huge, and the particle diameter is suitable for avoiding immediate precipitation. Typically, the aqueous solution may contain coagulates having a particle diameter of 1 to 100 µm, preferably 2 to 80 µm, more preferably 4 to 60 µm, still more preferably 5 to 50 µm. Thus, the coagulates have a dimension which does not immediately cause precipitation. Therefore, the aqueous solution after the high-temperature sterilization may be subjected to the next step, that is, lactic acid fermentation treatment either as such or after the addition of lactic bacteria or yeast.

The particle diameter of the coagulates may be measured, for example, with a laser diffraction particle size distribution measuring apparatus SALD-2100 (manufactured by Shimadzu Corporation).

The lactic acid fermentation is fermentation in which an aqueous whey protein solution is fermented with a predetermined microorganism under predetermined fermentation conditions which will be described later to produce an organic acid (for example, lactic acid, succinic acid, or lactic acid), particularly lactic acid. Either lactic bacteria or yeasts are preferably used as the microorganism in the lactic acid fermentation. In the lactic acid fermentation according to the present invention, whether or not an organic acid, particularly lactic acid, is produced and the production level of the organic acid, can be confirmed by measuring the acidity (%) of an object solution.

The "acidity" may be determined by Japanese Laws Relating To Cow's Milk (Japan Dairy Industry Association, March 2004), "5 Nyu Oyobi Nyuseihin No Sando No Sokuteiho (Method for measuring acidity of milk and dairy products)" p. 56. Specifically, 10 ml of water free from carbon dioxide is added to 10 ml of a sample to dilute the sample. A phenolphthalein liquid (0.5 ml) is added as an indicator, and titration is carried out with a 0.1 mol/L sodium hydroxide solution regarding, as the end point, a point that a slightly reddish color does not disappear for 30 sec. The percentage lactic acid per 100 g of the sample is determined from the titer and is regarded as the acidity (%). When the acidity of lactic acid is determined, this acidity is particularly referred to as "lactic acid acidity" (%). In this case, 1 ml of 0.1 mol/L sodium hydroxide solution corresponds to 9 mg of lactic acid. The indicator is prepared by dissolving 1 g of phenolphthalein in 50% ethanol to a volume of 100 ml.

Any lactic bacteria may be used without particular limitation so far as they are usable in the whey fermentation, and examples thereof include the genus Lactobacillus, the genus Streptococcus, and the genus Bifidobacterium. Specific examples thereof include lactobacillus strains Lactobacillus bulgaricus and

### Streptococcus thermophilus.

Any yeast may be used without particular limitation so far as it is usable in the whey fermentation, and examples thereof include the genus Candida, and the genus Kluveromyces. Specific examples thereof include yeast strains Candida Kefyr and

### Kluyveromyces Marxianus.

In addition to lactic acid fermentation with lactic bacteria, lactic acid fermentation with yeast can be carried out. When the lactic acid fermentation is carried out with yeast, a flavor different from that produced in the fermentation with lactic bacteria can be produced. This can realize the production of various good whey preparations. In the present invention, if necessary, a mixture of the fermentation liquor (or whey preparation) produced by the lactic acid fermentation with lactic bacteria with the fermentation liquor (or whey preparation) produced by using yeast may be used.

The amount of the bacteria added (the amount of the bacteria as a starter) is, for example, such that the concentration of lactic bacteria (or yeast) in the aqueous solution is about 10⁹ cfu/mL. Preferably, the amount of the bacteria added is about 0.1 to 3% by weight based on the weight of the aqueous whey protein solution after the sterilization and is more specifically 2% by weight.

Conditions for fermentation with lactic bacteria are, for example, 30 to 50°C and 1 to 40 hr, preferably 35 to 45°C and 2 to 20 hr, more preferably 37 to 43°C and 3 to 10 hr.

Conditions for fermentation with yeast are, for example, 20 to 40°C and 1 to 72 hr, preferably 25 to 35°C and 12 to 60 hr, more preferably 27 to 33°C and 24 to 48 hr.

After the lactic acid fermentation, the resultant fermentation liquor is homogenized. The size of the coagulates contained in the fermentation liquor can be reduced. When the fermentation liquor is homogenized, the homogenization is carried out in such a state that the lactic bacteria (or yeast) and metabolites thereof are contained. That is, the fermentation liquor as such is homogenized. The homogenization of the fermentation liquor as such is important from the viewpoints of imparting suitable viscosity and stability, that is, excellent texture and flavor and high storage stability, to the fermentation liquor.

The viscosity of the fermentation liquor may be, for example, 10 to 300 cp, preferably 15 to 250 cp, more preferably 20 to 200 cp. When beverages are produced with the fermentation liquor according to the present invention, the viscosity of the fermentation liquor affects beverages to impart a suitable viscosity to the beverages. When the viscosity of the fermentation liquor and beverage is excessively high, handling is sometimes difficult in the actual production. Accordingly, if necessary, in consideration of handleability in the production process and the like, the production conditions of the fermentation liquor may be changed, or the viscosity of the produced fermentation liquor may be modified.

When the homogenization treatment is carried out, for example, with a homogenizer, the homogenization treatment may be carried out under conditions of about 10 to 60°C, about 10 to 50 MPa, and about 100 to 1000 L/hr, preferably 12 to 25 MPa. If necessary, the homgenization treatment may be carried out a plurality of times while changing the homogenization conditions. In a specific example of the homongenization treatment, the homogenization treatment may be carried out in such a manner that first-stage homogenization treatment is carried out at about 20°C and 8 MPa followed by second-stage homogenization treatment at about 20°C and 4 MPa.

### Beverage

According to the present invention, there is provided a beverage comprising a fermented whey preparation according to the as defined by claims 1-5. A desired beverage is produced by adding any desired component to the fermented whey preparation according to claims 6-9.

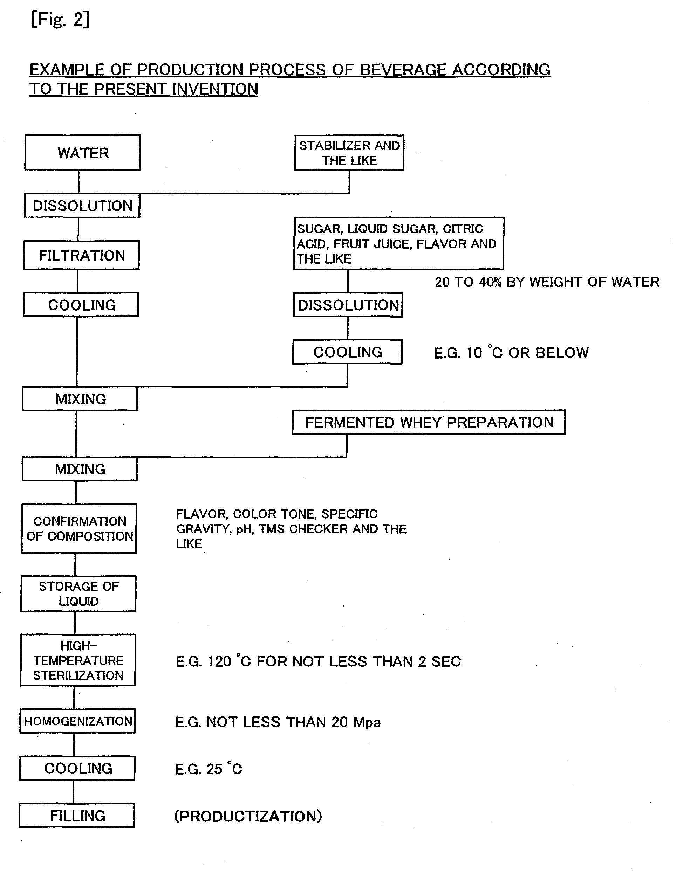

An example of a flow sheet in a production process of a beverage according to the present invention is shown in Fig. 2.

Specifically, an additive component, for beverages, including a stabilizer is dissolved in water (for example, deionized water) as a starting material, and the solution is mixed with the above fermented whey preparation. After the mixing, if necessary, the mixture is emulsified followed by high-temperature sterilization. Conditions in this case are high-temperature sterilization conditions commonly used, for example, in beverages, for example, 100 to 150°C and about 1 to 30 sec.

Accordingly, this beverage is produced by further adding additive components for beverages to the fermented whey preparation according to the present invention and subjecting the mixture to high-temperature sterilization at 100 to 150°C for about 1 to 30 sec.

In a preferred embodiment of the present invention, the high-temperature sterilization treatment in the beverage production process may be carried out under conventional heating conditions well known in a person having ordinary skill in the art, preferably under conditions of 110 to 140°C and 1 to 20 sec, more preferably 115 to 135°C and 1 to 10 sec, still more preferably 120 to 130°C and 1 to 5 sec, particularly preferably 120°C and about 3 sec.

In the beverage production according to the present invention, any additive component (additive component for beverages) may be used without particular limitation so far as the additive component is commonly used for beverages. Such components include, for example, stabilizers such as pectins, soybean polysaccharides, and CMCs (carboxymethylcellulose), sugars, granulated sugars, liquid sugars (for example, glucose fructose liquid sugars), caseins, crystalline celluloses, proteases, perfumes (fro example, orange flavors, apple flavors, and yogurt flavors), fruit juices (for example, fruit juices of apples), fruits or purees (for example, apple purees), and acidulants (for example, citric acid).

The amount of the additive component used is, for example, 20 to 40% by weight, based on the fermented whey preparation, for example, for sugars and fruit juices, and is a few percents by weight, for example, for perfumes and acidulants. The addition amount in the above-defined range is advantageous for the production of beverages which maintains flavors and textures inherent in the fermented whey preparation.

After the sterilization treatment, if necessary, the resultant beverage may be further homogenized. The homogenization may be carried out with a homogenizer, for example, under conditions of 80 to 85°C and 25 MPa (first stage: 20 MPa, second stage: 5 MPa).

Thereafter, if necessary, the step of cooling (for example, cooled to 25°C) may be carried out to produce a beverage according to the present invention.

The beverage produced according to the present invention is a beverage having excellent flavor and the like and may contain particles, for example, having a size of 0.5 to 5 µm. Although the beverage according to the present invention may contain such fine particles, in this case, the percentage settling upon centrifugation is preferably not more than 2%. This means that the beverage has such a property that precipitation hardly takes places.

### [EXAMPLES]

### Example 1: Preparation of fermented whey preparation (in the case where lactic bacteria were used)

A sweet whey powder and a nonfat dry milk (all the above products being manufactured by Meiji Dairies Corporation) (17.5 g) were provided as whey proteins and were dissolved in deionized water to give aqueous whey protein solutions having a solid content of 17% by weight (an aqueous whey solution and an aqueous nonfat dry milk solution). Further, the aqueous whey solution was adjusted to pH about 7.0 by the addition of sodium hydroxide as a pH adjustor. The aqueous whey protein solutions were heat sterilized at 95°C for 15 sec with a plate-type heat exchanger. After the sterilization, the aqueous solutions were observed. As a result, it was found that coagulated particles having a size of less than 100 µm (average particle diameter 3 µm (aqueous whey solution) and a size of 1 µm (aqueous nonfat dry milk solution)) were contained. The aqueous solutions thus obtained were cooled to 43°C.

Next, 0.1% by weight, based on the total amount of the aqueous solution, of a freeze concentrate of a lactic bacteria starter (a mixed culture product of Lactobacillus bulgaricus JCM 1002T and Streptococcus thermophilus ATCC 19258) was added to these aqueous whey protein solutions, and the mixture was held at 43°C for lactic acid fermentation.

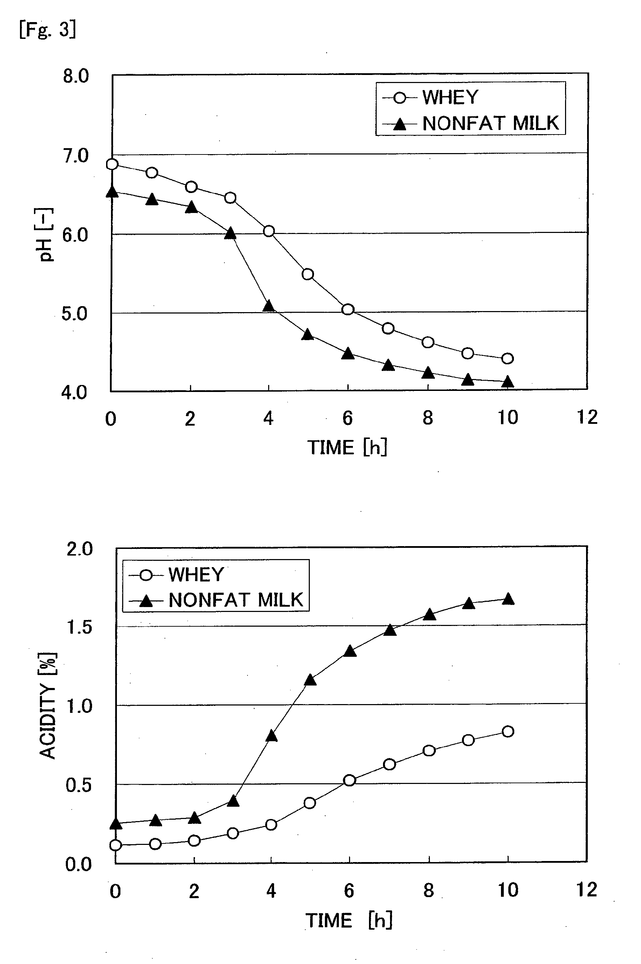

The pH value and acidity (%) of the aqueous whey protein solution (an aqueous whey solution and an aqueous nonfat dry milk solution) were measured at one-hr intervals until 10 hr elapsed from the start of the lactic acid fermentation. The results were as shown in Fig. 3.

The fermentation liquors containing lactic bacteria and metabolites thereof were homogenized with a homogenizer set to about 12 MPa and about 100 L/hr. The fermented whey preparations thus obtained had flavors and properties desired in the present invention.

### Example 2: Preparation of fermented whey preparation (in the case where yeast was used)

A sweet whey powder (manufactured by Meiji Dairies Corporation) (14.5 g) was provided as a whey protein and was dissolved in deionized water to give an aqueous whey protein solution an aqueous whey solution having a solid content of 14% by weight. The aqueous whey solution was adjusted to pH about 6.7 by the addition of sodium hydrogencarbonate as a pH adjustor. Next, the aqueous whey protein solution was heat sterilized in hot water at 95°C for 10 min. The aqueous solution thus obtained was cooled to 30°C.

Next, 2% by weight, based on the total amount of the aqueous solution, of a culture solution of yeast (Candida Kefyr No.4142, manufactured by Meiji Dairies Corporation) was added to the aqueous whey protein solution. The mixture was held at 30°C for yeast fermentation. In this case, the yeast was a yeast activated with a culture solution containing glucose, a yeast extract, and a malt extract.

At the stage of start of the yeast fermentation, the pH value and the lactic acid acidity were 6.70 and 0.1%, respectively, and two days after the start of the yeast fermentation, the pH value and the lactic acid acidity were 6.10 and 0.22%, respectively. Further, six days after the start of the yeast fermentation, the pH value and the lactic acid acidity were 4.57 and 0.67%, respectively. The fermentation liquor after two days from the start of the yeast fermentation was homogenized with a homogenizer set to about 12 MPa and about 100 L/hr. The fermented whey preparation surely had fermentation odor, and the whey-derived cooked odor was masked, whereby the yeast-derived flavor component provided a flavor favorable as a food.

### Example 3: Preparation of fermented whey preparation and beverage (in the case where lactic bacteria were used)

A sweet whey powder (manufactured by Meiji Dairies Corporation) (17.5 g) was provided as a whey protein and was dissolved in deionized water to give an aqueous whey protein solution having a solid content of 17% by weight. The aqueous whey protein solution was adjusted to pH about 7.0 by the addition of potassium carbonate as a pH adjustor. Next, the aqueous whey protein solution was heat sterilized in hot water at 95°C for 10 min. After the sterilization, the aqueous solution was observed. As a result, it was found that the aqueous solution contained coagulated particles having a size of less than 100 µm (average particle diameter 10 µm). The aqueous solution thus obtained was cooled to 43°C.

In this case, the composition of the aqueous whey solution was investigated. As a result, it was found that the aqueous whey solution comprised 2.04% by weight of protein, 12.8% by weight of lactose, 1.4% by weight of ash, and 0.17% by weight of fat.

Next, 2% by weight (liquid weight), based on the total amount of the aqueous solution, of a lactic bacteria starter (a mixed culture product of Lactobacillus bulgaricus JCM 1002T and Streptococcus thermophilus ATCC 19258) was added to the aqueous whey protein solution, and the mixture was held at 43°C for lactic acid fermentation. Six hr after the start of the lactic acid fermentation, the number of lactic bacteria reached 10⁹ cfu/mL. At this point, the fermentation liquor containing the lactic bacteria and the metabolite thereof was homogenized with a homogenizer set to about 10 MPa and about 100 L/hr. The fermented whey preparation thus obtained surely had flavor and properties desired in the present invention.

To the fermented whey preparation was added 0.5% by weight of soybean polysaccharide or 0.4% by weight of pectin. The mixture was sterilized at a high temperature of 120°C for 2 sec and was then cooled to give a beverage according to the present invention. The beverage had a particle size of about 0.5 to 5 µm, had a fermentation-derived unique and good flavor and, at the same time, had a refreshed and invigorating flavor and further has a velvety texture.

### Example 4: Difference in thermal stability depending upon concentration of aqueous whey protein solution

A mixture of a sweet whey powder with WPC (a whey protein concentrate) was provided as a whey protein. The amount of the sweet whey powder and the amount of WPC were 19.38 g and 9.5 g, respectively (mixing ratio (on a weight basis) = 2 : 1).

The sweet whey powder used had a solid content of 97.0%, a protein content of 12.0%, a lactose content of 75.5%, and an ash content of 8.5% (all the contents being by weight), and the WPC (manufactured by DOMO, The Netherlands) had a solid content of 95.5%, a protein content of 76.0%, a lactose content of 12.0%, an ash content of 2.5%, and other component content of 5.0% (all the contents being by weight). The mixed whey powder obtained by the mixing had a solid content of 96.5%, a protein content of 33.0%, a lactose content of 54.6%, an ash content of 6.5%, and other component content of 2.4%.

This mixed whey powder was brought to solid contents as shown in the following table with deionized water to give samples i to v. Except for "sample v," the pH value was adjusted to 7.0 by the addition of an aqueous NaOH (10%) solution. The composition ratio for each sample was as shown in Table 1 below.

Each sample was then subjected to high-temperature sterilization treatment with a bench thermostatic chamber at 95°C for 10 min. After the treatment, each sample was collected and was visually observed to evaluate the thermal stability according to the following criteria.

### Evaluation criteria:

A: Coagulates were so small that they were not be substantially noticeable visually.
B: Soft coagulates were observed but could be recovered from tank by using a power blender or the like.
C: Solid coagulates were observed. Proteins were clearly denatured and could not be recovered from tank without difficulties.

The results were as shown in Table 1.
[Table 1]

**Table 1**

| Sample | Solid content | Protein | Lactose | Ash content | pH adjustment | Evaluation of coagulate |
|---|---|---|---|---|---|---|
| Sample i | 28.9% | 9.9% | 16.4% | 1.9% | 7.0 | B |
| Sample ii | 20.0% | 6.8% | 11.3% | 1.3% | 7.0 | B |
| Sample iii | 17.0% | 5.8% | 9.6% | 1.1% | 7.0 | A |
| Sample iv | 14.5% | 4.9% | 8.2% | 1.0% | 7.0 | A |
| Sample v | 28.9% | 9.9% | 16.4% | 1.9% | 6.4 | C |

### Example 5: Difference in properties of fermented whey preparation depending upon composition of whey protein

Aqueous whey protein solutions were subjected to high-temperature sterilization in the same manner as in Example 3, except that samples a to d shown in Table 2 below were used as mixed whey powders and the solid content was brought to 17.0% by weight as indicated below.
[Table 2]

**Table 2**

| Sample | Sweet whey powder : WPC Mixing ratio (weight basis) | Solid content | Protein | Lactose | Ash content |
|---|---|---|---|---|---|
| Sample a | 2 : 1 | 17.0% | 5.8% | 9.7% | 1.2% |
| Sample b | 3 : 2 | 17.0% | 7.0% | 8.5% | 1.0% |
| Sample c | 3 : 4 | 17.0% | 8.5% | 7.0% | 0.9% |
| Sample d | 1 : 0 | 16.4% | 2.0% | 12.8% | 1.4% |

Next, lactic bacteria (2% by weight) were added to the aqueous solutions in the same manner as in Example 3. Lactic acid fermentation was carried out at 43°C for 6 hr for fermentation.

The fermentation liquors were homogenized with a homogenizer at 15 MPa (first stage: 10 MPa, second stage: 5 MPa) successively to give fermented whey preparations. The preparations thus obtained were stored at 10°C for 6 days. The preparations after the storage were measured for viscosity (cp), pH, and acidity (%).

The viscosity was measured with a Brookfield viscometer (LVY, manufactured by Brookfield Engineering Laboratories, Inc.) at 10°C. The pH value was measured with a pH meter (manufactured by Horiba, Ltd.) at 20°C. Further, the acidity was measured by a conventional method, that is, by titration with phenolphthalein.

The results are shown in following Table 3.

The viscosity of the preparation increased with increasing the protein concentration. Specifically, when WPC was contained, the resultant preparation had higher viscosity. Further, regarding actual flavor or texture, the preparation containing WPC had a higher level of milk feeling and a higher level of fermented milk feeling. Regarding the above tendency of the fermented whey preparations, when beverages were prepared using these preparations, the same tendency was observed for each beverage.
[Table 3]

**Table 3**

| Sample | Viscosity, cp | pH | Acidity, % |
|---|---|---|---|
| Sample a | 600 | 4.26 | 0.92 |
| Sample b | 778 | 4.27 | 0.97 |
| Sample c | 940 | 4.26 | 0.95 |
| Sample d | 72 | 4.14 | 1.09 |

### Example 6: Difference in particle diameter of coagulate produced after sterilization depending upon protein concentration and pH value of aqueous whey protein solution

A sweet whey powder was provided, and aqueous whey solutions respectively having concentrations of 11%, 14%, 17%, 20%, 24%, 28%, and 32% (on a weight basis) were prepared. Each aqueous whey solution was adjusted to pH 6.50, 6.65, 6.80, 6.95, 7.5, and 8.0 by the addition of sodium hydroxide. Each sample was placed in a medium bottle followed by heating at 95°C for 15 min in hot water. The average particle diameter was then measured. The average particle diameter was measured with a laser diffraction-type grain size distribution measuring apparatus SALD-2100 (manufactured by Shimadzu Corporation).

The results are shown in Table 4.

### Example 7: Difference in properties of fermented whey preparation depending upon pH value of aqueous whey protein solution

An aqueous whey protein solution having a solid content of 17% by weight was prepared in the same manner as in Example 3. A sample having a pH value of 6.0 and a sample having a pH value of 7.0 were prepared by using a 20 wt% aqueous citric acid solution and a 10 wt% aqueous sodium hydroxide solution as pH adjustors. The aqueous whey protein solutions were heat sterilized within a tank under 95°C and 10 min. After heating, the aqueous solutions were observed. As a result, the average particle diameters were as shown the following table.

Next, 0.1% by weight, based on the total amount of the aqueous solution, of a freeze concentrate of a lactic bacteria starter (a mixed culture product of Lactobacillus bulgaricus JCM 1002T and Streptococcus thermophilus ATCC 19258) was added to these aqueous whey protein solutions, and the mixtures were held at 43°C for 6 hr for fermentation.

The fermentation liquors were homogenized with a homogenizer at 15 MPa (first stage: 10 MPa, second stage: 5 MPa) successively to give fermented whey preparations α and β. The viscosity (cp) of the fermented whey preparations was measured in the same manner as in Example 5. Further, the percentage centrifugation of the fermented whey preparations was determined by centrifuging 10 ml of the solution at 2000 rpm for 10 min and measuring the amount (ml) of the resultant precipitate.

The results are shown in Table 4.
[Table 4]

**Table 4**

| Aqueous whey protein solution/fermented whey preparation | | α | β |
|---|---|---|---|
| Average particle diameter of coagulate after heat sterilization and before fermentation, µm | | 27 | 7 |
| pH | Before pH adjustment (initial value) | 6.4 | 6.4 |
| | After pH adjustment | 6.0 | 7.0 |
| | After fermentation | 4.5 | 4.6 |
| Viscosity after homogenization, cp (10°C) | | 6.7 | 189 |
| Centrifugation after homogenization, ml/10 ml | | 1.5 | 7.0 |

When the pH value was adjusted to 6.0, the coagulates after the fermentation had a smooth flow feeling. On the other hand, when the pH value was adjusted to 7.0, the coagulates had a thickened unique properties. Upon lactic bacteria fermentation of an aqueous whey protein solution, the lactic bacteria secrete viscous polysaccharides. When the pH value of the aqueous solution is brought to an acidic side, it is considered that the particle diameter of the coagulates (particles of proteins) becomes excessively large, for example, by acid coagulation, and, as a result, a network among the coagulates through the polysaccharides is less likely to be formed. This is considered to cause a difference in viscosity of the preparation after the homogenization. The above consideration is theory and does not limit the present invention.

### Example 8: Production of beverages Production process:

Beverages 1 to 3 according to the present invention were produced according to the following formulations using the fermented whey preparation prepared in Example 1 (hereinafter referred to as "whey fermented milk 1"). Specifically, a sugar powder and a stabilizer were mixed together. The mixture was added to and dissolved in water at about 50°C. A liquid sugar, a perfume, and whey fermented milk 1 were added in that order to the solution, and the pH value of the mixture was adjusted by the addition of citric acid and sodium citrate.

After the pH adjustment, a part of the mixture was collected as a sample which was then evaluated for thermal stability. The thermal stability was evaluated by heating the collected sample at 130°C, and measuring the time taken for the coagulate to occur.

Next, the solution after the pH adjustment was treated in an autoclave (110°C for one min) for sterilization. The sterilization conditions are assumed to be the same conditions equivalent, for example, to conditions of 130°C and a few seconds.

After the sterilization, the solution was homogenized at 25 MPa to give desired beverages 1 to 3.

For each of the beverages thus obtained, the average particle diameter and percentage centrifugation of coagulates contained in the beverage were measured. The average particle diameter was measured with a laser diffraction-type particle size distribution measuring apparatus SALD-2100 (manufactured by Shimadzu Corporation). The percentage centrifugation was determined by centrifuging 10 ml of the solution at 2000 rpm for 10 min and measuring the amount of the resultant precipitate (ml).

In the following description, the ratio or "%" is by weight unless otherwise specified.

### Formulation Example 1 (Beverage 1):

[Table 5]

**Table 5**

| | Mixing ratio, % | Charged amount, g |
|---|---|---|
| Whey fermented milk 1 | 19.05 | 190.5 |
| Sugar | 9.00 | 90.0 |
| Glucose fructose liquid sugar | 0.60 | 6.0 |
| Citric acid (20%) | 0.10 | 1.0 |
| Stabilizer (soybean polysaccharide) (San-Ei Gen F.F.I.,Inc.) | 0.35 | 3.5 |
| Yogurt flavor | 0.15 | 1.5 |
| Water | 70.8 | 707.5 |
| Total | 100.00 | 1000.0 |

| | | |
|---|---|---|
| (pH adjustment: pH 4.0) | | |

### Formulation Example 2 (Beverage 2):

[Tbale 6]

**Table 6**

| | Mixing ratio, % | Charged amount, g |
|---|---|---|
| Whey fermented milk 1 | 19.05 | 95.3 |
| Sugar | 8.00 | 40.0 |
| Glucose fructose liquid sugar | 1.60 | 8.0 |
| Citric acid (20%) | 0.10 | 0.5 |
| Stabilizer (HM pectin) (CP Kelco.) | 0.50 | 2.5 |
| Yogurt flavor | 0.15 | 0.8 |
| Water | 70.6 | 353.0 |
| Total | 100.00 | 500.0 |

| | | |
|---|---|---|
| (pH adjustment: pH 3.5) | | |

### Formulation Example 3 (Beverage 3):

[Table 7]

**Table 7**

| | Mixing ratio, % | Charged amount, g |
|---|---|---|
| Whey fermented milk 1 | 19.05 | 190.5 |
| Sugar | 3.00 | 30.0 |
| Glucose fructose liquid sugar | 6.60 | 66.0 |
| Sodium citrate (20%) | 0.10 | 1.0 |
| Stabilizer (CMC) (Nippon Paper Industry Co., Ltd.) | 0.40 | 4.0 |
| Yogurt flavor | 0.15 | 1.5 |
| Water | 70.7 | 707.0 |
| Total | 100.00 | 1000.0 |

| | | |
|---|---|---|
| (pH adjustment: pH 4.6) | | |

The results are shown in following Table 8.
[Table 8]

**Table 8**

| | Thermal stability | Average particle diameter, µm | Centrifugation, mL |
|---|---|---|---|
| Beverage 1 | Not less than 10 min | 509 | 0.1 |
| Beverage 2 | Not less than 10 min | 1.091 | 0.1 |
| Beverage 3 | Not less than 2 min | 2.202 | 0.1 |

## Claims

1. A beverage comprising a fermented whey preparation, **characterized in that** said fermented whey preparation is obtainable by carrying out at a high-temperature sterilization of 91°C to 99°C for 5 to 15 min or at a temperature of 100°C to 150°C for 1 to 30 sec of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor.

2. The beverage according to claim 1, wherein the aqueous whey protein solution has been adjusted to pH 6.6 to 7.6.

3. The beverage according to claim 1 or 2, wherein, when the aqueous solution after the high-temperature sterilization contains coagulates, the coagulates have a particle diameter of 2 to 100 µm and the aqueous solution as such is subjected to the step of lactic acid fermentation.

4. The beverage according to any one of claims 1 to 3, wherein, in the lactic acid fermentation step, lactic acid is produced by fermentation with lactic bacteria or yeast.

5. A beverage according to any one of claims 1 to 4 obtainable by adding an additive component for beverages to the fermented whey preparation and subjecting the mixture to high-temperature sterilization treatment at 100°C to 150°C for 1 to 30 sec.

6. A method for producing a beverage, comprising adding an additive component for beverages to a fermented whey preparation and subjecting the mixture to high-temperature sterilization treatment at 100°C to 150°C for 1 to 30 sec **characterized in that** said fermented whey preparation is obtainable by a method comprising carrying out high-temperature sterilization of an aqueous whey protein solution having a solid content of 11 to 35% by weight and a pH value adjusted to 6.5 to 8.0, then subjecting the aqueous whey protein solution to lactic acid fermentation, and homogenizing the resultant fermentation liquor wherein the high-temperature sterilization is carried out at a temperature of 91°C to 99°C for 5 to 15 min or at a temperature of 100°C to 150°C for 1 to 30 sec.

7. The method according to claim 6, wherein the aqueous whey protein solution has been adjusted to pH 6.6 to 7.6.

8. The method according to claims 6 or 7, wherein, when the aqueous solution after the high-temperature sterilization contains coagulates, the coagulates have a particle diameter of 2 to 100 µm and the aqueous solution as such is subjected to the step of lactic acid fermentation.

9. The method according to any one of claims 6 to 8, wherein, in the lactic acid fermentation step, lactic acid is produced by fermentation with lactic bacteria or yeast.

## Patentansprüche

1. Getränk, ein vergorenes Molkepräparat umfassend, **dadurch gekennzeichnet, dass** das besagte vergorene Molkepräparat erhältlich ist, indem man 5 bis 15 Minuten lang bei 91°C bis 99°C, oder 1 bis 30 Sekunden lang bei 100°C bis 150°C eine Hitzesterilisation einer wässrigen Molkeproteinlösung mit einem Gewichtsgehalt an Feststoffen von 11 bis 35% und einem auf 6,5 bis 8,0 eingestellten pH-Wert durchführt, und die wässrige Molkeproteinlösung danach einer Milchsäuregärung aussetzt, und die dadurch entstandene Fermentationsbrühe homogenisiert.

2. Getränk nach Anspruch 1, wobei die wässrige Molkeproteinlösung auf einen pH-Wert von 6,6 bis 7,6 eingestellt worden ist.

3. Getränk nach Anspruch 1 oder 2, wobei, wenn die wässrige Lösung nach der Hitzesterilisation Ausflockungen enthält, die Ausflockungen einen Teilchendurchmesser von 2 bis 100 µm aufweisen, und die wässrige Lösung als solche dem Schritt der Milchsäuregärung ausgesetzt wird.

4. Getränk nach irgendeinem der Ansprüche 1 bis 3, wobei im Schritt der Milchsäuregärung durch die Gärung mit Milchsäurebakterien oder Hefe Milchsäure erzeugt wird.

5. Getränk nach irgendeinem der Ansprüche 1 bis 4, das durch die Beigabe einer Beimischungskomponente für Getränke in das vergorene Molkepräparat erhältlich ist, und dadurch, dass die Mischung einer Behandung durch Hitzesterilisation bei 100°C bis 150°C für die Dauer von 1 bis 30 Sekunden ausgesetzt wird.

6. Verfahren zur Herstellung eines Getränks, die Beigabe einer Beimischungskomponente für Getränke in ein vergorenes Molkepräparat, und die Aussetzung der Mischung einer Behandung durch Hitzesterilisation bei 100°C bis 150°C für die Dauer von 1 bis 30 Sekunden umfassend, **dadurch gekennzeichnet, dass** das besagte vergorene Molkepräparat durch ein Verfahren erhältlich ist, das die Ausführung einer Hitzesterilisation einer wässrigen Molkeproteinlösung mit einem Gewichtsgehalt an Feststoffen von 11 bis 35% und einem auf 6,5 bis 8,0 eingestellten pH-Wert umfasst, und danach die Aussetzung der wässrigen Molkeproteinlösung einer Milchsäuregärung und die Homogenisierung der entstandenen Fermentationsbrühe, wobei die Hitzesterilisation 5 bis 15 Minuten lang bei 91°C bis 99°C, oder 1 bis 30 Sekunden lang bei 100°C bis 150°C durchgeführt wird.

7. Verfahren nach Anspruch 6, wobei die wässrige Molkeproteinlösung auf einen pH-Wert von 6,6 bis 7,6 eingestellt worden ist.

8. Verfahren nach den Ansprüchen 6 oder 7, wobei, wenn die wässrige Lösung nach der Hitzesterilisation Ausflockungen enthält, die Ausflockungen einen Teilchendurchmesser von 2 bis 100 µm aufweisen, und die wässrige Lösung als solche dem Schritt der Milchsäuregärung ausgesetzt wird.

9. Verfahren nach irgendeinem der Ansprüche 6 bis 8, wobei im Schritt der Milchsäuregärung durch die Gärung mit Milchsäurebakterien oder Hefe Milchsäure erzeugt wird.

## Revendications

1. Boisson comprenant une préparation de lactosérum fermenté, **caractérisée en ce que** ladite préparation de lactosérum fermenté est susceptible d'être obtenue en réalisant une stérilisation à haute température de 91 °C à 99 °C pendant 5 à 15 min ou à une température de 100 °C à 150 °C pendant 1 à 30 s d'une solution protéique de lactosérum aqueuse ayant une teneur en solides de 11 à 35 % en poids et un pH ajusté à une valeur de 6,5 à 8,0, puis en soumettant la solution protéique de lactosérum aqueuse à une fermentation lactique, et en homogénéisant la liqueur de fermentation résultante.

2. Boisson selon la revendication 1, dans laquelle la solution protéique de lactosérum aqueuse a été ajustée à un pH de 6,6 à 7,6.

3. Boisson selon la revendication 1 ou 2, dans laquelle, lorsque la solution aqueuse après la stérilisation à haute température contient des coagulats, les coagulats ont un diamètre de particule de 2 à 100 µm et la solution aqueuse en tant que telle est soumise à l'étape de fermentation lactique.

4. Boisson selon l'une quelconque des revendications 1 à 3, dans laquelle, dans l'étape de fermentation lactique, de l'acide lactique est produit par fermentation avec des ferments lactiques ou de la levure.

5. Boisson selon l'une quelconque des revendications 1 à 4 susceptible d'être obtenue en ajoutant un additif pour boissons à la préparation de lactosérum fermenté et en soumettant le mélange à un traitement de stérilisation à haute température de 100 °C à 150 °C pendant 1 à 30 s.

6. Méthode de production d'une boisson, comprenant l'ajout d'un additif pour boissons à une préparation de lactosérum fermenté et la soumission du mélange à un traitement de stérilisation à haute température de 100 °C à 150 °C pendant 1 à 30 s, **caractérisée en ce que** ladite préparation de lactosérum fermenté et susceptible d'être obtenue par une méthode comprenant la réalisation d'une stérilisation à haute température d'une solution protéique de lactosérum aqueuse ayant une teneur en solides de 11 à 35 % en poids et un pH ajusté à une valeur de 6,5 à 8,0, puis la soumission de la solution protéique de lactosérum aqueuse à une fermentation lactique, et l'homogénéisation de la liqueur de fermentation résultante, dans laquelle la stérilisation à haute température est réalisée à une température de 91 °C à 99 °C pendant 5 à 15 min ou à une température de 100 °C à 150 °C pendant 1 à 30 s.

7. Méthode selon la revendication 6, dans laquelle la solution protéique de lactosérum aqueuse a été ajustée à un pH de 6,6 à 7,6.

8. Méthode selon les revendications 6 ou 7, dans laquelle, lorsque la solution aqueuse après la stérilisation à haute température contient des coagulats, les coagulats ont un diamètre de particule de 2 à 100 µm et la solution aqueuse en tant que telle est soumise à l'étape de fermentation lactique.

9. Méthode selon l'une quelconque des revendications 6 à 8, dans laquelle, dans l'étape de fermentation lactique, de l'acide lactique est produit par fermentation avec des ferments lactiques ou de la levure.
